(19) Europäisches Patentamt
European Patent Office
Office européen des brevets

(11) EP 4 340 114 A1

(12) EUROPEAN PATENT APPLICATION

(43) Date of publication:
**20.03.2024 Bulletin 2024/12**

(21) Application number: **23196999.9**

(22) Date of filing: **12.09.2023**

(51) International Patent Classification (IPC):
***H01M 50/446*** *(2021.01)*

(52) Cooperative Patent Classification (CPC):
**H01M 50/446;** H01M 10/0525

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.09.2022 KR 20220114782**

(71) Applicants:
- **SK Innovation Co., Ltd.**
  **Seoul 03188 (KR)**
- **SK ie technology Co., Ltd.**
  **Jongno-gu**
  **Seoul**
  **03188 (KR)**

(72) Inventors:
- **KWON, Tae Wook**
  **34124 Daejeon (KR)**
- **LEE, Sang Ick**
  **34124 Daejeon (KR)**
- **KWACK, Won Sub**
  **34124 Daejeon (KR)**
- **KIM, Cheol Woo**
  **34124 Daejeon (KR)**
- **KWAK, Hyo Shin**
  **34124 Daejeon (KR)**
- **BAE, Heung Taek**
  **34124 Daejeon (KR)**

(74) Representative: **Prüfer & Partner mbB**
**Patentanwälte · Rechtsanwälte**
**Sohnckestraße 12**
**81479 München (DE)**

# (54) SEPARATOR COATING COMPOSITION FOR SECONDARY BATTERY, SEPARATOR USING THE SAME, AND ELECTROCHEMICAL DEVICE INCLUDING THE SAME

(57) Provided are a separator coating composition for a secondary battery including inorganic particles and a silane salt compound having a specific structure, a separator using the same, and an electrochemical device including the same. Specifically, provided is a separator coating composition for a secondary battery which implements adhesion between an inorganic material layer and a porous substrate without the need of including an acid and/or a polymer-based organic binder in a coating composition for forming the inorganic material layer on one or both surfaces of the porous substrate, and which does not need a separate acidic dispersing agent for dispersing the inorganic particles. A separator manufactured using the separator coating composition, and an electrochemical device including the separator are also provided.



Processed by Luminess, 75001 PARIS (FR)

## Description

### TECHNICAL FIELD

Embodiments of the present disclosure relate to a separator coating composition for a secondary battery, a separator using the same, and an electrochemical device including the same.

### BACKGROUND

In recent years, in line with the high capacity and high output trends of a secondary battery, there is a growing demand for improved performance characteristics such as high strength, high permeability, and thermal stability of a separator, and also for improved safety characteristics of a separator for electrical safety of a secondary battery during charging and discharging. The lithium secondary battery is required to have high mechanical strength for improving safety in a battery manufacture process and during use of the battery, and to have high permeability and high thermal stability for improving capacity and output.

In addition, the secondary battery is charged/discharged by repeating a process in which a lithium ion of a positive electrode is intercalated into and deintercalated from a negative electrode. When charging and discharging are repeated as such, the theoretical capacity of a battery varies depending on the type of an electrode active material, but generally, as the cycle proceeds, a charge and discharge capacity is decreased.

Conventionally, as an aspect for improving thermal resistance of a separator for a secondary battery, an inorganic particle coating layer formed of inorganic particles or inorganic particles and organic particles is introduced on a porous substrate such as a polyolefin for securing safety, thereby commercializing a battery.

However, when the inorganic particle coating layer is introduced to a porous substrate layer such as polyolefin, a polymer binder is conventionally used for bonding the inorganic particle coating layer and the porous substrate layer or fixing connection between inorganic particles. However, a chemical reaction may occur between a polymer binder which is an organic binder and an electrolyte solution of a battery, hence an organic binder may be dissolved in an electrolyte and may elute, or an organic binder may swell due to an electrolyte solution. When the chemical reaction between the organic binder and the electrolyte solution and the elution and swelling of the organic binder occur, various problems which degrade battery performance may occur, such as performance degradation of an electrolyte due to pore closure, gassing, or elution of a porous substrate and increased volume of a battery by swelling.

Therefore, a new separator having excellent thermal and electrochemical stability and is advantageous for keeping open the pores of the porous substrate layer, and which solves the above problems, will be highly desirable.

### SUMMARY

As a result of many studies for solving the problems, it was found that a separator which has an inorganic material layer formed with a composition for coating a separator including inorganic particles and a silane salt compound having a specific structure on one or both surfaces of a porous substrate may implement extremely improved adhesion between inorganic particles and the separator. It is particularly advantageous that the composition for coating the separator does not need using any acid, which conventionally was essentially used for reactivity adjustment when using a known silane coupling agent (SCA) such as 3-acryloxypropyltrimethoxysilane and 3-aminopropyltrimethoxysilane. It is additionally advantageous that the present disclosure optionally allows avoiding using a polymer-based organic binder lacking chemical stability, thereby completing the present disclosure.

An embodiment of the present disclosure is directed to providing a separator coating composition for a secondary battery which implements adhesion between an inorganic material layer and a porous substrate without including an acid/polymer-based organic binder in a coating composition for forming an inorganic material layer on one or both surfaces of a porous substrate, and does not need a separate acidic dispersing agent for dispersing inorganic particles, a separator manufactured using the same, and an electrochemical device including the separator.

According to an aspect of the present invention, a separator coating composition is provided which includes inorganic particles and a silane salt compound of the following Chemical Formula 1:

Chemical Formula 1

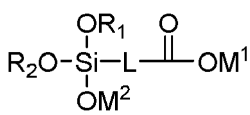

wherein

$M^1$ and $M^2$ are independently of each other an alkali metal;
L is C1-C3 alkylene; and
$R_1$ and $R_2$ are independently of each other hydrogen or an alkali metal.

In an embodiment the alkali metal may be lithium or sodium.

In a further embodiment, L is C2 or C3 alkylene (ethylene or propylene), preferably is C2 alkylene (ethylene).

In further embodiments, $M^1$ and $M^2$ may be the same and may be lithium or sodium, and/or $R_1$ and $R_2$ may be the same and may be hydrogen.

According to another aspect of the present invention, a separator for a secondary battery includes: (a) a porous substrate; and (b) an inorganic material layer formed by applying the separator coating composition on one or both surfaces of the porous substrate.

According to another aspect of the present invention, a method of manufacturing a separator for a secondary battery includes: coating one or both surfaces of a separator substrate formed of a porous polymer resin with the separator coating composition.

According to yet another aspect of the present invention, an electrochemical device includes the separator for a secondary battery.

Other features and aspects will become apparent to the skilled person from the following detailed description, and the drawings.

## DETAILED DESCRIPTION OF EMBODIMENTS

Hereinafter, a separator coating composition for a secondary battery according to embodiments of the present disclosure, a separator using the same, and an electrochemical device including the same will be described in detail.

Herein, unless otherwise defined, all technical terms and scientific terms have the same meanings as those commonly understood by one of ordinary skill in the art to which the present disclosure pertains. The terms used herein are only for effectively describing a certain specific example and are not intended to limit the present disclosure. Further, unless otherwise stated, the unit of added materials herein may be a part by weight.

In addition, the singular form used in the specification and claims appended thereto may be intended to also include a plural form, unless otherwise indicated in the context.

The present disclosure provides a separator coating composition for manufacturing a separator for a secondary battery which has a low heat shrinkage rate, excellent air permeability, and excellent adhesive strength to prevent ignition or rupture due to an abnormal phenomenon such as a rapid temperature rise, and thus, has improved dimensional stability of a separator at a high temperature, a separator manufactured using the same, and an electrochemical device including the separator.

The separator coating composition according to an embodiment of the present disclosure includes a compound of the following Chemical Formula 1 and inorganic particles:

Chemical Formula 1

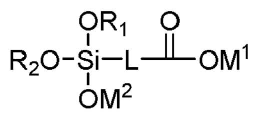

Wherein,

$M^1$ and $M^2$ are independently of each other an alkali metal;
L is C1-C3 alkylene; and
$R_1$ and $R_2$ are independently of each other hydrogen or an alkali metal.

The separator coating composition according to an embodiment uses the compound of Chemical Formula 1 having excellent inorganic/organic (or inorganic) bonding properties and excellent thermal stability at a high temperature as a silane coupling agent (SCA) and is coated on a porous substrate to improve dimensional stability of a separator at a high temperature. That is, according to the present disclosure, the compound of Chemical Formula 1 having a specific structure has a structure including an alkali metal salt such as lithium or sodium included in a secondary battery electrolyte as an alkali metal salt and may provide a separator having high ion conductivity and high stability at a high temperature.

In addition, the separator coating composition according to an embodiment may provide significantly improved adhesion between the inorganic particles and the separator without using any acid which was conventionally used for reactivity adjustment when using a known silane coupling agent (SCA) such as 3-acryloxypropyltimethoxysilane. The separator coating composition may also prevent a problem of equipment corrosion due to the conventional use of an acid, and improve safety during the process.

In addition, the separator coating composition does not need a separate acidic dispersing agent for dispersing an inorganic material and has better coatability and processability due to mixing alone with the inorganic material.

In some embodiments, in Chemical Formula 1, $M^1$ and $M^2$ may be independently of each other lithium or sodium; L may be C2-C3 alkylene; $R_1$ and $R_2$ may be independently of each other hydrogen, lithium, or sodium.

In some embodiments, in Chemical Formula 1, $M^1$ and $M^2$ may be the same and may be lithium or sodium, preferably are both lithium; L may be C2 alkylene (ethylene); $R_1$ and $R_2$ may be the same and may be hydrogen.

In some embodiments, the compound of Chemical Formula 1 may be a compound represented by the following Chemical Formula 2, 3, or 4:

Chemical Formula 2

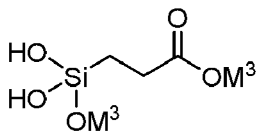

Chemical Formula 3

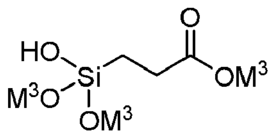

Chemical Formula 4

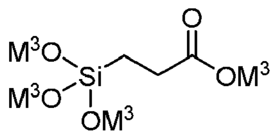

wherein $M^3$ is lithium or sodium.

In some embodiments, the compound may be one or a mixture of two or more selected from the following structures:

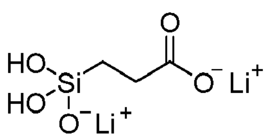
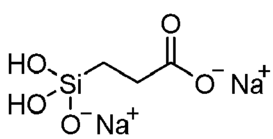
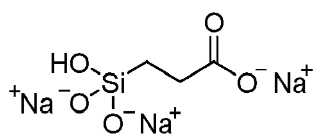

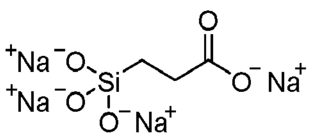
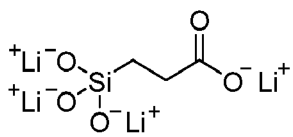

The inorganic particles are intended to be coated on the separator to increase the strength of the separator and are not particularly limited as long as they are electrochemically stable. As an example, inorganic particles which do not cause an oxidation or reduction reaction under conditions of operating a battery are more preferred, and those

having ion transfer ability may also be used.

Examples of suitable inorganic particles include one or a mixture of two or more selected from the group consisting of metal oxides, metal nitrides, metal carbides, metal carbonates, metal hydroxide, and metal carbonitrides may be used, and, more specifically, oxides, carbides, nitrides, phosphates, alloy, or the like including one or more metal elements selected from the group consisting of Al, Ti, Ba, Pb, Zr, Sr, Hf, Li, Zn, Ce, Mg, Ca, Y, Nb, and Si. However, the present disclosure is not limited thereto.

According to an embodiment, the inorganic particles may be one or a mixture of two or more selected from the group consisting of boehmite, alumina ($Al_2O_3$), titanium oxide ($TiO_2$), cerium(IV) oxide ($CeO_2$), magnesium oxide (MgO), nickel(II) oxide (NiO), yttrium(III) oxide ($Y_2O_3$), calcium oxide (CaO), strontium titanate ($SrTiO_3$), tin dioxide ($SnO_2$), zinc oxide (ZnO), and zirconium dioxide ($ZrO_2$), but are not limited thereto, and are not limited as long as they are electrochemically stable and do not significantly affect battery performance.

An average particle size (D50) of the inorganic particles is not limited as long as the purpose of the present disclosure is achieved, but, for example, the inorganic particles in a range of 0.001 to 10 $\mu$m, specifically 0.01 to 3 $\mu$m are preferred since the purpose of the present disclosure is easily achieved. In addition, the shape of the inorganic particles is not particularly limited, and for example, may include all circular, prismatic, elliptical, random, or mixed shapes thereof.

In the separator coating composition according to an embodiment, the compound of Chemical Formula 1 may be included at 0.1 to 45 parts by weight, specifically 0.5 to 30 parts by weight, more specifically 1 to 10 parts by weight, and still more specifically 2 to 5 parts by weight, with respect to 100 parts by weight of the inorganic particles and is not necessarily limited thereto. Within these ranges, a bonding force between an inorganic material layer and a substrate layer, better thermal resistance, and mechanical strength may be expressed, resulting in increased stability at a high temperature of the separator, which is thus more preferred.

In the separator coating composition according to an embodiment, since the compound of Chemical Formula 1 serves to bond the inorganic particles together and connect the inorganic particles and the porous substrate excellent adhesion may be achieved without a separate organic binder. However, if required, an organic binder may be further included, specifically for improving physical properties such as a further increase in adhesive strength or an improvement of puncture strength. If an organic binder may be further included, the separator coating composition may comprise an organic binder in an amount of 5.00% by weight or less, 4.00% by weight or less, 3.00% by weight or less as an upper limit, and without particular limitation, 0.01% by weight or more, 0.05% by weight or more, or 0.10% by weight or more as a lower limit, based on the total weight of the composition.

The organic binder may be used without limitation as long as it is usually used in a separator, and as an example, the binder may be any one or a mixture of two or more selected from polyvinylidene fluoride (PVdF), polytetrafluoroethylene (PTFE), polyurethane, polymethylpentene (PMP), polyethylene terephthalate (PET), polycarbonate (PC), polyester, polyvinyl acetamide (PNVA), polyvinyl alcohol (PVA), polyvinyl pyrrolidone (PVP), polyacrylonitrile (PAN), polymethylene oxide (PMO), polymethyl methacrylate (PMMA), polyethylene oxide (PEO), polyamide (PA), polyamideimide (PAI), polysulfone (PS), polyether sulfone (PES), polyarylate (PAR), polyimide (PI), polyaramid (PA), cellulose, copolymers using them, and similar or related organic binder materials, and is not necessarily limited thereto.

The separator coating composition according to an embodiment may include a dispersing solvent for securing coatability by dispersing the compound of Chemical Formula 1 and the inorganic particles. As the dispersing solvent, water is mainly used. Other suitable dispersing solvents, lower alcohols such as ethanol, methanol, or propanol include, for example, solvents such as dimethylformamide, acetone, tetrahydrofuran, diethylether, methylene chloride, N-methyl-2-pyrrolidone, hexane, and cyclohexane or mixtures thereof may be used, however the present disclosure is not necessarily limited thereto.

The dispersing solvent may be included at 50 to 90 wt%, preferably 60 to 85 wt%, with respect to the entire separator coating composition.

The separator coating composition according to an embodiment has excellent dispersibility and less particle agglomeration in the composition.

It is preferred that the separator coating composition according to an embodiment is prepared by mixing the inorganic particles and the compound of Chemical Formula 1 and crushing any aggregates of the inorganic particles using, for example, a ball mill, a beads mill, a planetary mixer (grinding and mixing method by rotation/revolution), homogenizer, and similar or related means, however the present disclosure is not limited thereto. For example, a crushing time may be 0.01 to 20 hours. An average particle size of the crushed inorganic particles may be preferably 0.001 to 10 $\mu$m as mentioned above and is not necessarily limited thereto. For example, the dispersion may be performed using an orbital shaker including zirconia beads having a size of 1 mm.

Since the separator coating composition according to an embodiment has a low heat shrinkage, an excellent air permeability, and excellent adhesive strength, ignition or rupture due to an abnormal phenomenon such as a rapid temperature rise, a separator for a secondary battery having improved separator dimensional stability at a high temperature may be manufactured.

Another embodiment of the present disclosure provides a separator for a secondary battery including (a) a porous substrate; and (b) an inorganic material layer formed by applying a separator coating composition including inorganic particles and the compound of Chemical Formula 1 on one or both surfaces of the porous substrate.

The separator according to an embodiment of the present disclosure includes a porous substrate, and an inorganic material layer, that is, a coating layer formed of the separator coating composition, that is, a separator coating composition including a compound of Chemical Formula 1 and inorganic particles. The separator coating composition may be placed on one or both surfaces of the porous substrate.

The porous substrate may include, for example, a porous polymer film which is prepared from a polymer used as a separator, a sheet, a non-woven fabric, a woven-fabric, and similar or related porous substrate materials are variously used. The porous substrate may, in some embodiments, have a laminated structure in which two or more of the layers are laminated, however the present disclosure is not necessarily limited thereto.

Preferably, the polyolefin-based porous film may include, for example, low-density polyethylene, linear low-density polyethylene, high-density polyethylene, ultrahigh molecular weight polyethylene, polypropylene, copolymers thereof, or derivatives thereof, however the present disclosure is not necessarily limited thereto.

The thickness of the porous substrate is not particularly limited as long as the purpose of the present disclosure is achieved, but may be 1 to 100 μm, preferably 3 to 60 μm, and more preferably 5 to 30 μm.

The pore size and the porosity of the porous substrate are not particularly limited. However, in some embodiments, the porosity may be in a range of 10 to 95% and the pore average size (average diameter) may be 0.001 to 20 μm, specifically 0.001 to 20 μm, more specifically 0.01 to 5 μm, still more specifically 0.05 to 5 μm, however they are not necessarily limited thereto.

The thickness of the coating layer formed by applying the separator coating composition according to the embodiment on the porous substrate is not particularly limited, however, in some embodiments the thickness of the coating layer may be 40% or less of the total thickness of the separator. In some embodiments, the thickness of the coating layer may be in a range of 0.01 to 50 μm, or of 0.1 to 10 μm.

The porosity of the coating layer is determined by the size of particles, and is not particularly limited, but may be, for example, 10 to 95%. The porosity means the ratio of the volume occupied by the pores to the total volume

The thickness of the separator according to an embodiment is not particularly limited, and may be 1 to 100 μm, specifically 5 to 100 μm, and more specifically 5 to 50 μm.

Since the separator according to an embodiment has excellent mechanical properties, excellent adhesive strength between the coating layer and the substrate, and less inorganic particle loss even after repeated charging and discharging, it may improve the life characteristics of a secondary battery. In addition, the separator according to an embodiment has excellent air permeability, that is, gas permeability, allows very uniform formation of the coating layer, has a dimensional stability at a high temperature of 150°C of 5% or less, has excellent thermal resistance, and may prevent ignition or rupture by an abnormal phenomenon such as a rapid temperature rise.

The separator according to an embodiment may show an amount of change in air permeability (△G) as represented by the following Equation 1:

[Equation 1]

$$\Delta G = G_1 - G_2 \leq 20$$

wherein $G_1$ is a Gurley permeability of a separator on which the inorganic material layer is formed, $G_2$ is a Gurley permeability of the porous substrate itself, and the Gurley permeability is measured in accordance with ASTM D726 and has a unit of sec/100 cc.

The separator according to an embodiment has an air permeability of 20 sec/100 cc or less, specifically 15 sec/100 cc or less, and for example, 1 to 20 sec/100 cc, 1 to 15 sec/100 cc, or 5 to 15 sec/100 cc. Within the air permeability range, an increase in internal resistance of a secondary battery may be effectively suppressed.

The separator according to an embodiment may have a change in heat shrinkage (%) of 1% or less when being allowed to stand at 150°C for 1 hour. For example, when the separator is allowed to stand at 150°C for 1 hour, it may have both a shrinkage rate in the machine direction (MD) and a shrinkage rate in the transverse direction (TD) of 1% or less. More specifically, when the separator is allowed to stand at 150°C for 1 hour, it may have a shrinkage rate in MD of 0.5% or less and a shrinkage rate in TD of 1% or less. Within the range, the heat shrinkage properties of the separator may be suppressed, and thus, rate properties and life characteristics may be effectively improved.

The separator according to an embodiment having the air permeability and the shrinkage rate described above has easy movement between ions at a positive electrode and a negative electrode, and has excellent thermal resistance, so that the short circuit of the electrode may be effectively prevented and the safety of the battery may be improved.

The separator according to an embodiment includes an inorganic material layer which fixes the inorganic

particles together and the surfaces of the inorganic particles and the porous substrate with high adhesive strength, without the need of using an organic-based polymer as a binder, has a significantly low heat shrinkage rate, has more improved thermal resistance, and may prevent ignition or rupture by an abnormal phenomenon such as a rapid temperature rise.

The separator according to an embodiment has no pore closure caused by a conventional organic-based polymer binder and no pore closure by swelling, and thus, has excellent ion mobility, has no obstacle to ion movement of lithium ions and similar improvements, and may improve electrical properties such as charge and discharge battery capacity or efficiency of a battery.

The separator according to an embodiment has significantly increased thermal resistance and chemical resistance, may sufficiently secure adhesive strength, and may show thermal safety, electrochemical safety, excellent lithium ion conductivity, prevention of electrolyte solution contamination, an excellent electrolyte solution impregnation rate effect, and similar related properties simultaneously.

The separator according to an embodiment has minimized thermal expansion or heat shrinkage inside an electrochemical device as compared with a separator having an active layer using a conventional polymer-based organic binder and is not easily ruptured by excessive conditions due to internal or external factors such as high temperature, overcharge, and external impact, thereby achieving improved safety.

Another embodiment of the present disclosure relates to a method of manufacturing the separator for a secondary battery, and specifically, may include coating one or both surfaces of a separator substrate formed of a porous polymer resin with the separator coating composition according to an embodiment.

According to the embodiment, a drying operation may be included after the coating of a separator coating composition. The drying operation may be performed at 30°C to 150°C for 5 seconds to 15 hours and drying may be batchwise or continuous.

The separator coating composition according to an embodiment is coated on the porous substrate and dried, thereby obtaining a separator having an inorganic material layer including inorganic particles and a compound of Chemical Formula 1 having a specific structure, formed on one or both surfaces of a porous substrate. Preferably, the composition may be coated on a polyolefin-based porous film and dried, thereby obtaining the separator of the present disclosure.

The coating method is not largely limited. Suitable examples, may include spray coating, knife coating, roll coating, die coating, dip coating, Mayer bar coating, screen coating, Gravure coating, and similar or related coating methods.

The separator for a secondary battery of the present disclosure manufactured described above may be used as a separator of an electrochemical device, for example, a lithium secondary battery. The electrochemical device is not particularly limited, but, for example, may be a primary battery, a secondary battery, a fuel battery, a capacitor, and similar or related electrochemical devices.

When the separator of the present disclosure is commonly used in a battery, the manufacturing method follows a common method of arranging and assembling a negative electrode, a separator, and a positive electrode, and injecting an electrolyte solution to complete the battery.

The lithium secondary battery may be manufactured by including the separator for a secondary battery according to an embodiment, a positive electrode, a negative electrode, and a nonaqueous electrolyte solution.

Since the separator for a secondary battery is as described above, the description thereof will be omitted.

The positive electrode and the negative electrode may be manufactured by mixing a positive electrode active material and a negative electrode active material with a solvent, and if required, a binder, a conductive material, a dispersing material, and similar or related components, and performing stirring to prepare a mixture, which is applied on a current collector of a metal material and dried, and then pressed.

Any positive electrode active material may be used, as long as it is an active material commonly used in the positive electrode of a secondary battery. For example, lithium metal oxide particles including one or two or more metals selected from the group consisting of Ni, Co, Mn, Na, Mg, Ca, Ti, V, Cr, Cu, Zn, Ge, Sr, Ag, Ba, Zr, Nb, Mo, Al, Ga, B, and a combination thereof may be used, however the present disclosure is not necessarily limited thereto.

Any negative electrode active material may be used as long as it is an active material commonly used in the negative electrode of a secondary battery. It is preferred that the negative electrode active material of the lithium secondary battery is capable of lithium intercalation. As a non-limiting example, the negative electrode active material may be one or two or more materials selected from the group consisting of lithium (metal lithium), easily graphitized carbon, hardly graphitized carbon, graphite, silicon, an Sn alloy, an Si alloy, an Sn oxide, an Si oxide, a Ti oxide, an Ni oxide, a Fe oxide (FeO), and a lithium-titanium oxide ($LiTiO_2$, $Li_4Ti_5O_{12}$), but is not necessarily limited thereto.

As the conductive materials, a common conductive carbon material may be used without limitation.

The metal material of the current collector is a metal which has high conductivity and to which the mixture of the positive electrode or the negative electrode active material may be easily adhered, and any one may be used as long as it has no reactivity in a battery voltage range. A non-limiting example of the positive electrode current collector may include foil or similar or related collector materials made of aluminum, nickel, or a combination thereof, and a non-limiting example of the negative electrode current collector may include foil or similar or related collector materials made of copper, gold, nickel, a copper alloy, or a combination thereof, and is not necessarily limited thereto.

The separator is interposed between the positive electrode and the negative electrode. A method of applying the separator to a battery, lamination (stack), folding, and the like of the separator and the electrode are possible, in addition to winding which is a common method, however the present disclosure is not necessarily limited thereto.

The nonaqueous solution includes a lithium salt as an electrolyte and an organic solvent. The lithium salt may include those commonly used in the electrolyte solution for a lithium secondary battery and may be represented by $Li^+X^-$.

The anion of the lithium salt is not particularly limited, and any one or two or more selected from $F^-$, $Cl^-$, $Br^-$, $I^-$, $NO^{3-}$, $N(CN)^{2-}$, $BF^{4-}$, $ClO^{4-}$, $PF^{6-}$, $(CF_3)_2PF^{4-}$; $(CF_3)_3PF^{3-}$, $(CF_3)_4PF^{2-}$, $(CF_3)_5PF^-$, $(CF_3)_6P^-$, $CF_3SO^{3-}$; $CF_3CF_2SO^{3-}$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO^{3-}$, $CF_3CO^{2-}$, $CH_3CO^{2-}$, $SCN^-$, and $(CF_3CF_2SO_2)_2N^-$ may be used, however the present disclosure is not necessarily limited thereto.

As the organic solvent, any one or a mixture of two or more selected from the group consisting of propylene carbonate, ethylene carbonate, diethyl carbonate, dimethyl carbonate, ethylmethyl carbonate, methylpropyl carbonate, dipropyl carbonate, dimethyl sulfoxide, acetonitrile, dimetoxyethane, diethoxyethane, sulfolane, γ-butyrolactone, tetrahydrofuran, or similar or related organic solvents may be used, however the present disclosure is not necessarily limited thereto.

The nonaqueous electrolyte solution may be injected into an electrode structure formed of a positive electrode, a negative electrode, and a separator interposed between the positive electrode and the negative electrode.

The external shape of the lithium secondary battery is not particularly limited. For example, the external shape of the lithium secondary battery, may be selected from a cylindrical shape using a can, a square shape, a pouch shape, a coin shape, and similar or related shapes.

Hereinafter, the present disclosure will be described in more detail, based on the examples and the comparative examples. However, the examples and the comparative examples are only examples for describing the present disclosure in more detail, and the present disclosure is not limited by the following examples and the comparative examples.

[Measurement method of physical properties]

(1) Thicknesses of inorganic material layer and separator

The thicknesses of an inorganic material layer and a separator were measured using TESA Mu-HITE Electronic Height Gauge from TESA, and a measurement pressure was 0.63 N.

(2) Average particle size of the inorganic particles

In the following Examples and Comparative Examples, D50 of active materials was measured by a laser diffraction method. In detail, 1 mg of the inorganic particle to be measured was dispersed in 30 g of distilled water, and then introduced into a laser diffraction particle size analyzer (Microtrac S3500). The particle size distribution was determined by measuring the diffraction pattern difference according to the particle size, when a laser beam passed through particles. D50 was determined by calculating the particle size at the 50% point on the cumulative distribution of the number of particles according to the particle size in the analyzer.

(3) Coating amount of inorganic material layer

The coating amount of the inorganic material layer was calculated by measuring weights of a separator before and after coating. For the separator before coating and the separator aged after coating, weights of the separator which was cut into a length of 1 m per unit area ($m^2$) before/after coating were measured and a coating weight ($g/m^2$) was calculated. At this time, XSE105 available from Mettler-Toledo (USA) was used as the scale.

(4) Amount of change in air permeability (ΔG)

Gurley permeability was measured in accordance with the standard of ASTM D726, using a porosimeter (Gurley densometer). A time it takes for 100 cc of air to pass through a separator having an area of 1 $in^2$ was recorded in seconds and the records were compared. The change amount in air permeability (ΔG) was measured using the following Mathematical Formula 1 from the measured Gurley permeability:

[Mathematical Formula 1]

$$\Delta G = G_1 - G_2$$

wherein $G_1$ is a Gurley permeability of a separator on which the inorganic material layer is formed, $G_2$ is a Gurley permeability of the porous substrate itself, and their unit is sec/100 cc.

(5) Adhesion test of strawboard

A separator was cut into a size of 50 mm×50 mm and was placed on a rubber pad with an inorganic layer placed underneath. A black strawboard (20 mm×50 mm×T 0.25 mm) was placed between the separator and the rubber pad, and a constant pressure (10 g/$cm^2$) was applied using a presser. The black strawboard was forcefully pulled aside, and a degree of an inorganic material adhered on the surface was confirmed and was identified as A/B/C depending on the adhered degree, considering the following grade:

A: no adhesion
B: inorganic material adhered in a small amount
C: binder and inorganic material adhered together

(6) Heat shrinkage rate

A separator having a width and a length of 10 cm× 10 cm was allowed to stand at 150°C for 1 hour, and a reduction rate of an area was measured to determine the heat shrinkage rate. The heat shrinkage was evaluated by calculating a shrinkage rate in the machine direction (MD) of the following Mathematical Formula 2 and a shrinkage rate in the transverse direction (TD) of the following Mathematical Formula 3:

Mathematical Formula 2

Heat shrinkage rate (%) in machine direction = ((length in machine direction before heating - length in machine direction after heating) / length in machine direction before heating) × 100

Mathematical Formula 3

Heat shrinkage rate (%) in transverse direction = ((length in transverse direction before heating - length in transverse direction after heating) / length in transverse direction before heating) × 100

**[Preparation of compound of Chemical Formula 1]**

The compound of Chemical Formula 1 was prepared according to the reference: Silicon, 2013, 5, 187-197. The specific preparation process of each compound was as follows.

Preparation Example 1 Preparation of Compound 1

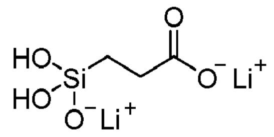

100 g of distilled water, 2.4 g (0.1 mole) of lithium hydroxide, and 10.9 g (0.05 mole) of cyanoethyl triethoxysilane were added to a 250 ml round bottom flask equipped with a magnetic stirrer and a condenser, and a reflux reaction was performed with stirring. The smell of ammonia was generated within 15 minutes of the reaction, and the reaction was performed for 18 hours until the smell disappeared. After the reaction was complete, a distillation device was installed and 57 g of water was removed by distillation. The temperature was initially 98°C and reached 100°C after removing about 10 ml. After cooling, water was further added so that the total volume of the solution was 146 ml. At this time, the content of Si in the solution was 0.962 g/100 ml, and the pH of the solution was about 12 to 13.
$^1H$ NMR (in $D_2O$, 500MHz) $\delta$ 3.50 (quartet, J=7.0 Hz, $CH_3CH_2OH$), 2.06 (m, 2H, Si-$CH_2$-C**$H_2$**-$CO_2Li$), 1.03 (triplet, J=7.0 Hz, C**$H_3$**$CH_2OH$), 0.59. (m, 2H, Si-C**$H_2$**-$CH_2$-$CO_2Li$)

Preparation Example 2 Preparation of Compound 2

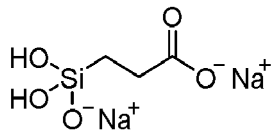

100 g of distilled water, 4.0 g (0.1 mole) of sodium hydroxide, and 10.9 g (0.05 mole) of cyanoethyl triethoxysilane were added to a 250 ml round bottom flask equipped with a magnetic stirrer and a condenser, and a reflux reaction was performed with stirring. The smell of ammonia was generated within 15 minutes of the reaction, and the reaction was performed for 18 hours until the smell disappeared. After the reaction was complete, a distillation device was installed and 57 g of water was removed by distillation. The temperature was initially 98°C and reached 100°C after removing about 10 ml. After cooling, water was further added so that the total volume of the solution was 146 ml. At this time, the content of Si in the solution was 0.962 g/100 ml, and the pH of the solution was about 12 to 13.
$^1H$ NMR (in $D_2O$, 500MHz) $\delta$ 3.45 (quartet, J=7.0 Hz, $CH_3$**$CH_2$**OH), 2.02 (m, 2H, Si-$CH_2$-**$CH_2$**-$CO_2Na$), 0.95 (triplet, J=7.0 Hz, **$CH_3$**$CH_2OH$), 0.55. (m, 2H, Si-**$CH_2$**-$CH_2$-$CO_2Na$)

Preparation Example 3 Preparation of Compound 3

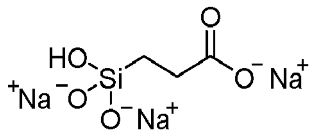

100 g of distilled water, 6.0 g (0.15 mole) of sodium hydroxide, and 10.9 g (0.05 mole) of cyanoethyl triethoxysilane were added to a 250 ml round bottom flask equipped with a magnetic stirrer and a condenser, and a reflux reaction was performed with stirring. The smell of ammonia was generated within 15 minutes of the reaction, and the reaction was performed for 18 hours until the smell disappeared. After the reaction was complete, a distillation device was installed and 57 g of water was removed by distillation. The temperature was initially 98°C and reached 100°C after removing about 10 ml. After cooling, water was further added so that the total volume of the solution was 146 ml. At this time, the content of Si in the solution was 0.962 g/100 ml.
$^1H$ NMR (in $D_2O$, 500MHz) $\delta$ 3.50 (quartet, J=7.0 Hz, $CH_3$**$CH_2$**OH), 2.06 (m, 2H, Si- $CH_2$-C**$H_2$**-$CO_2Na$), 1.03 (triplet, J=7.0 Hz, **$CH_3$**$CH_2OH$), 0.59. (m, 2H, Si-**$CH_2$**-$CH_2$-$CO_2Na$)

Preparation Example 4 Preparation of Compound 4

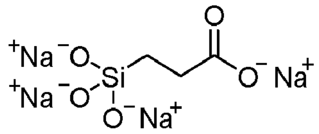

100 g of distilled water, 8.0 g (0.2 mole) of sodium hydroxide, and 10.9 g (0.05 mole) of cyanoethyl triethoxysilane were added to a 250 ml round bottom flask equipped with a magnetic stirrer and a condenser, and a reflux reaction was performed with stirring. The smell of ammonia was generated within 15 minutes of the reaction, and the reaction was performed for 18 hours until the smell disappeared. After the reaction was complete, a distillation device was installed and 57 g of water was removed by distillation. The temperature was initially 98°C and reached 100°C after removing about 10 ml. After cooling, water was further added so that the total volume of the solution was 146 ml. At this time, the content of Si in the solution was 0.962 g/100 ml.
$^1$H NMR (in $D_2O$, 500MHz) $\delta$ 3.50 (quartet, J=7.0 Hz, $CH_3\mathbf{CH_2}OH$), 2.06 (m, 2H, Si-$CH_2$-C$\mathbf{H_2}$-$CO_2Na$), 1.03 (triplet, J=7.0 Hz, $\mathbf{CH_3}CH_2OH$), 0.59. (m, 2H, Si-$\mathbf{CH_2}$-$CH_2$-$CO_2Na$)

Preparation Example 5 Preparation of Compound 5

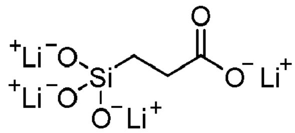

100 g of distilled water, 4.8 g (0.15 mole) of lithium hydroxide, and 10.9 g (0.05 mole) of cyanoethyl triethoxysilane were added to a 250 ml round bottom flask equipped with a magnetic stirrer and a condenser, and a reflux reaction was performed with stirring. The smell of ammonia was generated within 15 minutes of the reaction, and the reaction was performed for 18 hours until the smell disappeared. After the reaction was complete, a distillation device was installed and 57 g of water was removed by distillation. The temperature was initially 98°C and reached 100°C after removing about 10 ml. After cooling, water was further added so that the total volume of the solution was 146 ml. At this time, the content of Si in the solution was 0.962 g/100 ml.
$^1$H NMR (in $D_2O$, 500MHz) $\delta$ 3.50 (quartet, J=7.0 Hz, $CH_3\mathbf{CH_2}OH$), 2.06 (m, 2H, Si- $CH_2$-C$\mathbf{H_2}$-$CO_2Li$), 1.03 (triplet, J=7.0 Hz, $\mathbf{CH_3}CH_2OH$), 0.59. (m, 2H, Si-$\mathbf{CH_2}$-$CH_2$-$CO_2Li$)

**[Manufacture of separator for secondary battery and evaluation of physical properties]**

[Example 1]

1) Preparation of coating composition

24.21 g of the solution of Compound 1 obtained in Preparation Example 1 was added to 100 g of distilled water and dispersed, 34 g of boehmite ($\gamma$-AlOOH) having an average particle diameter of 300 nm (0.3 $\mu$m) was added, and mixing was performed using Homo mixer (product name: Dispermat LC, manufacturer: VMA) to prepare a uniform aqueous slurry.

2) Manufacture of separator

As a porous substrate, a polyethylene porous film having a thickness of 9 $\mu$m (porosity: 50%, Gullery conct., 70 sec/100cc, tensile strength: MD 2110 kgf/cm$^2$, TD 1870 kgf/cm$^2$) was used. Both surfaces of the porous substrate were corona discharge treated (power density: 2 W/mm) to introduce a surface polar group, and the corona surface treatment was performed at a speed of 5 mpm (meter per minute). It was confirmed that there were a carboxylic acid group and a hydroxyl group on both surfaces of the corona discharge-treated substrate layer by FTIR analysis.

The aqueous slurry was applied on both surfaces of the porous substrate using a Mayer bar, and dried at 40°C for 1 minute to form an inorganic material layer having a thickness of 1.4 μm on each of the two surfaces of the porous substrate. The substrate having an inorganic material layer formed was aged at 80°C for 12 hours to manufacture a separator for a secondary battery (total thickness = 11.8 μm). The separator manufactured above was used to measure the physical properties, which are shown in Table 1.

Example 2

1) Preparation of coating composition

20.25 g of the solution of Compound 2 obtained in Preparation Example 2 was added to 100 g of distilled water and dispersed, 34 g of boehmite (γ-AlOOH) having an average particle diameter of 300 nm (0.3 μm) was added, and mixing was performed using Homo mixer (product name: Dispermat LC, manufacturer: VMA) to prepare a uniform aqueous slurry.

2) Manufacture of separator

The aqueous slurry was applied on both surfaces of the porous substrate using a Mayer bar in the same manner as in Example 1, and dried to form an inorganic material layer having a thickness of 1.4 μm on each of the both surfaces of the porous substrate. The substrate having an inorganic material layer formed was aged at 80°C for 12 hours to manufacture a separator for a secondary battery (total thickness = 11.8 μm). The separator manufactured above was used to measure the physical properties, which are shown in Table 1.

Example 3

1) Preparation of coating composition

24.21 g of the solution of Compound 1 obtained in Preparation Example 1 was added to 100 g of distilled water and dispersed, 34 g of boehmite (γ-AlOOH) having an average particle diameter of 300 nm (0.3 μm) was added, and mixing was performed using Homo mixer (product name: Dispermat LC, manufacturer: VMA) to prepare a uniform aqueous slurry.

2) Manufacture of separator

The aqueous slurry was applied on both surfaces of the porous substrate using a Mayer bar in the same manner as in Example 1, and dried at 40°C for 1 minute to form an inorganic material layer having a thickness of 2 μm on each of the both surfaces of the porous substrate. The substrate having an inorganic material layer formed was aged at 80°C for 12 hours to manufacture a separator for a secondary battery (total thickness = 13 μm). The separator manufactured above was used to measure the physical properties, which are shown in Table 1.

Example 4

1) Preparation of coating composition

20.25 g of the solution of Compound 2 obtained in Preparation Example 2 was added to 100 g of distilled water and dispersed, 34 g of boehmite (γ-AlOOH) having an average particle diameter of 300 nm (0.3 μm) was added, and mixing was performed using Homo mixer (product name: Dispermat LC, manufacturer: VMA) to prepare a uniform aqueous slurry.

2) Manufacture of separator

The aqueous slurry was applied on both surfaces of the porous substrate using a Mayer bar in the same manner as in Example 1, and dried at 40°C for 1 minute to form an inorganic material layer having a thickness of 2.25 μm on each of the both surfaces of the porous substrate. The substrate having an inorganic material layer formed was aged at 80°C for 12 hours to manufacture a separator for a secondary battery (total thickness = 13.5 μm). The separator manufactured above was used to measure the physical properties, which are shown in Table 1.

Example 5

24.21 g of the solution of Compound 1 obtained in Preparation Example 1 was added to 100 g of distilled water and dispersed, 17 g of boehmite (γ-AlOOH) having an average particle diameter of 300 nm (0.3 μm) and 17 g of boehmite (γ-AlOOH) having an average particle diameter of 1.6 μm were added, and mixing was performed using Homo mixer (product name: Dispermat LC, manufacturer: VMA) to prepare a uniform aqueous slurry.

2) Manufacture of separator

The aqueous slurry was applied on both surfaces of the porous substrate using a Mayer bar in the same manner as in Example 1, and dried at 40°C for 1 minute to form an inorganic material layer having a thickness of 2.35 μm on each of the both surfaces of the porous substrate. The substrate having an inorganic material layer formed was aged at 80°C for 12 hours to manufacture a separator for a secondary battery (total thickness = 13.7 μm). The separator manufactured above was used to measure the physical properties, which are shown in Table 1.

Example 6

20.25 g of the solution of Compound 2 obtained in Preparation Example 2 was added to 100 g of distilled water and dispersed, 17 g of boehmite (γ-AlOOH) having an average particle diameter of 300 nm (0.3 μm) and 17 g of boehmite (γ-AlOOH) having an average particle diameter of 1.6 μm were added, and mixing was performed using Homo mixer (product name: Dispermat LC, manufacturer: VMA) to prepare a uniform aqueous slurry.

2) Manufacture of separator

The aqueous slurry was applied on both surfaces of the porous substrate using a Mayer bar in the same manner as in Example 1, and dried at 40°C for 1 minute to form an inorganic material layer having a thickness of 2.45 μm on each of the both surfaces of the porous substrate. The substrate having an inorganic material layer formed was aged at 80°C for 12 hours to manufacture a separator for a secondary battery (total thickness = 13.9 μm). The separator manufactured above was used to measure the physical properties, which are shown in Table 1.

Comparative Example 1

A slurry of 30.0 g of boehmite having an average particle diameter of 800 nm (0.8 μm) and 15.0 g of acryl latex (ZEON, BM900B, solid content: 20 wt%) having a $T_g$ of -52°C mixed in 50.0 g of distilled water was prepared, coated on both surfaces of the porous substrate in the same manner as in Example 1, and dried to form an inorganic material layer having a thickness of 2 μm on each of the both surfaces of the porous substrate. The substrate having an inorganic material layer formed was aged at 80°C for 12 hours to manufacture a separator for a secondary battery (total thickness = 13 μm). The separator manufactured above was used to measure the physical properties, which are shown in Table 1.

Comparative Example 2

A slurry of 22.4 g of boehmite having an average particle diameter of 350 nm (0.35 μm), 8.5 g of polyvinyl alcohol (PVA) having a melting point of 220°C and a saponification degree of 99%, and 0.8 g of acryl latex (ZEON, BM900B, solid content: 20 wt%) having a $T_g$ of -52°C mixed in 56.0 g of distilled water was prepared, coated on both surfaces of the porous substrate in the same manner as in Example 1, and dried to form an inorganic material layer having a thickness of 1.5 μm on each of the both surfaces of the porous substrate. The substrate having an inorganic material layer formed was aged at 80°C for 12 hours to manufacture a separator for a secondary battery (total thickness = 12 μm). The separator manufactured above was used to measure the physical properties, which are shown in Table 1.

Comparative Example 3

3.3 g of aminopropylsilanetriol was added to 96.7 g of distilled water, lactic acid was added to prepare a 3.3 wt% silane solution having a pH of 4.5, and 29 g of boehmite having an average particle diameter of 350 nm (0.35 μm) was added to prepare a slurry, which coated on both surfaces of the porous substrate in the same manner as in Example 1 and dried, thereby forming an inorganic material layer having a thickness of 1.5 μm on each of the both surfaces of the porous substrate. The substrate having an inorganic material layer formed was aged at 80°C for 12 hours to manufacture a separator for a secondary battery (total thickness = 12 μm). The separator manufactured above was used to measure the physical properties, which are shown in Table 1.

Comparative Example 4

3.3 g of aminopropylsilanetriol was added to 96.7 g of distilled water to prepare a 3.3 wt% silane solution and 29 g of boehmite having an average particle diameter of 350 nm (0.35 μm) was added to prepare a slurry, which coated on both surfaces of the porous substrate in the same manner as in Example 1 and dried, thereby forming an inorganic material layer having a thickness of 1.5 μm on each of the both surfaces of the porous substrate. The substrate having an inorganic material layer formed was aged at 80°C for 12 hours to manufacture a separator for a secondary battery (total thickness = 12 μm). The separator manufactured above was used to measure the physical properties, which are shown in Table 1.

The physical properties of the separators for a secondary battery of Examples 1 to 6 and Comparative Examples 1 to 4 are shown in the following Table 1:

[Table 1]

| | Inorganic layer | | [Amount of change in air permeability] | Adhesive strength | Shrinkage rate (150°C, 1 hr) | |
|---|---|---|---|---|---|---|
| | Coating thickness (um) | Coating weight ($g/m^2$) | ΔGurley (sec/100cc) | Strawboard | MD (%) | TD (%) |
| Example 1 | 2.8 | 3.35 | 11 | A | 0.2 | 0.5 |
| Example 2 | 2.8 | 3.40 | 9 | A | 0.4 | 0.8 |
| Example 3 | 4.0 | 4.90 | 14 | A | 0.2 | 0.5 |
| Example 4 | 4.5 | 5.40 | 15 | A | 0 | 0.6 |
| Example 5 | 4.7 | 5.45 | 13 | A | 0.2 | 0.7 |
| Example 6 | 4.9 | 5.65 | 11 | A | 0.3 | 0.7 |
| Comparative Example 1 | 4.0 | 3.74 | 30 | A | 45 | 50 |
| Comparative Example 2 | 3.0 | 3.24 | 47 | B | 50.5 | 47.4 |
| Comparative Example 3 | 3.0 | 4.2 | 18 | A | 1.9 | 1.7 |
| Comparative Example 4 | 3.0 | 3.50 | 16 | C | 42 | 39 |

As shown in Table 1, the separators of the examples all had less amounts of change in air permeability, excellent adhesion to a strawboard, and an excellent shrinkage rate at a high temperature of 150°C of 1% or less.

Specifically, the separators of the examples showed the amount of change in air permeability of 15 sec/100 sec or less, and thus, though they had an inorganic material layer formed from the separator coating composition including a specific silane alkali metal salt compound and the inorganic particles, had excellent air permeability of a significantly low amount of change in air permeability as compared with those of the comparative examples.

That is, the separators of the examples had improved adhesive strength between the inorganic particles and the porous substrate and showed decreased interfacial resistance characteristics due to a low amount of change in air permeability. In addition, the separators of the examples facilitated moving of an electrolyte solution, in particular, lithium ions due to their excellent air permeability and effectively suppressed an increase in internal resistance of a secondary battery, and thus, a secondary battery including the separators of the examples may obtain an advantageous effect in output and life characteristics.

In addition, the separators of the examples all had a shrinkage rate at a high temperature of 150°C of 1% or less, which was a significantly smaller change in heat shrinkage than the comparative examples, and specifically, had a shrinkage rate in MD of 0.5% or less and a shrinkage rate in TD of 1% or less. Due to the suppression of the heat shrinkage of the separator, the rate properties and the life characteristics may be effectively improved when the separator is applied later to a secondary battery.

As a result of the adhesion test to a strawboard, it was shown that the separators of the examples retained adhesive strength at a commercially usable level as compared with those of the comparative examples, and thus, had

excellent coating physical properties.

Further, in Comparative Example 3, an acid was essentially included in the manufacture of the separator to implement improved physical properties as compared with other comparative examples, but due to the essentially included acid, problems such as corrosion of process equipment, threats to work safety during the process, and the like may arise.

As described above, since the separators of the examples had excellent air permeability and shrinkage rate, they had easy movement between ions at a positive electrode and a negative electrode when applied to a secondary battery, and had excellent thermal resistance, so that the short circuit of the electrode may be effectively prevented and the safety of the battery may be improved.

**[Manufacture of lithium secondary battery and evaluation of physical properties]**

The separators manufactured in Examples 1 to 6 and Comparative Examples 1 to 4 were used to manufacture the batteries as follows, and the discharge resistance of the batteries was measured.

(1) Manufacture of positive electrode

96 wt% of $LiCoO_2$ as a positive active material, 2.5 wt% of polyvinylidene fluoride (PVDF) as a binder, and 3.5 wt% of carbon black as a conductive agent were added to N-methyl-2-pyrrolidone (NMP) as a solvent and stirring was performed to prepare a uniform positive electrode slurry. The positive electrode slurry prepared above was coated on an aluminum foil having a thickness of 30 μm, dried, and pressed to manufacture a positive electrode having a total thickness of 150 μm.

(2) Manufacture of negative electrode

95 wt% of artificial graphite as a negative electrode active material, 3 wt% of acrylic latex (trade name: BM900B, solid content: 20 wt%) having $T_g$ of -52°C as a binder, and 2 wt% carboxymethyl cellulose (CMC) as a thickener were added to water as a solvent, and stirring was performed to prepare a uniform negative electrode slurry. The negative electrode slurry prepared above was coated on a copper foil having a thickness of 20 μm, dried, and pressed to manufacture a negative electrode having a total thickness of 150 μm.

(3) Manufacture of battery and measurement of discharge resistance

A pouch type battery was assembled by a method of stacking the separators manufactured in Examples 1 to 6 and Comparative Examples 1 to 4 between the positive electrode and the negative electrode manufactured above, an electrolyte solution of lithium hexafluorophosphate ($LiPF_6$) dissolved at a concentration of 1 M in a solution of ethylene carbonate (EC)/ ethylmethyl carbonate (EMC)/ dimethyl carbonate (DMC) - 3:5:2 (volume ratio) was injected, and the battery was sealed to manufacture a lithium secondary battery having a capacity of 2 Ah. A discharge resistance of the battery manufactured by the above method was measured by a method of J-pulse (Japan Electric Vehicle Association Standards, JEVS D 713) and the results are shown in the following Table 2;

[Table 2]

| | Examples | | | | | | Comparative Examples | | | |
|---|---|---|---|---|---|---|---|---|---|---|
| | 1 | 2 | 3 | 4 | 5 | 6 | 1 | 2 | 3 | 4 |
| Discharge resistance (mΩ) | 34.9 | 35.6 | 36.2 | 36.5 | 38.2 | 36.7 | 43.5 | 41.9 | 35.8 | Occurrence of defects |

As shown in Table 2, the lithium secondary batteries manufactured using the separators of the examples had low discharge resistance, and specifically, showed a discharge resistance lowered by 3% or more, when compared with the batteries manufactured using the separators of the comparative examples 1 and 2, and thus, had excellent resistance stability during discharging, maintained low discharge overvoltage to have excellent battery operation characteristics, that is, excellent charge and discharge efficiency of batteries, had low heat generation during charging and discharging of batteries to increase battery stability, and also had an advantage in implementing high output of batteries.

Meanwhile, the lithium secondary battery manufactured using the separator of Comparative Example 3 showed discharge resistance similar to those of the examples, but as described above, due to the acid essentially included when

manufacturing the separator of Comparative Example 3, problems such as corrosion of process equipment and threats to work safety during the process may arise. The separator of Comparative Example 4 was manufactured with the same component as the separator of Comparative Example 3 without using an acid, but as shown in Table 2, it is shown that the acid is essentially needed to act as a separator when using the conventional SCA compound such as aminopropylsilanetriol.

Since the separator coating composition according to an embodiment includes inorganic particles and a silane salt compound having a specific structure, it has excellent adhesion with a separator substrate as well as excellent dispersibility of the inorganic particles without requiring a separate acidic dispersing agent. In addition, the separator coating composition according to an embodiment may provide a separator for a secondary battery having sufficient adhesive strength or better adhesive strength without requiring the use of any acid which conventionally was used for reactivity adjustment when using a known silane coupling agent (SCA) such as 3-acryloxypropyltrimethoxysilane or 3-aminopropyltrimethoxysilane, and without requiring the use of a polymer-based organic binder such as polyvinylidene fluoride. In addition, the separator coating composition according to an embodiment allows to exclude the use of an acid, thereby solving the problems such as corrosion of process equipment and stability threats during the process.

In addition, the separator manufactured using the separator coating composition according to an embodiment has improved thermal resistance to prevent ignition or rupture due to an abnormal phenomenon such as a rapid temperature rise, thereby improving dimensional stability of the separator at a high temperature.

In addition, the separator according to an embodiment completely or sufficiently removes pore closure by an organic binder or elution into an electrolyte, and thus, when it is applied to an electrochemical device such as a secondary battery, lithium ions in the manufactured separator move smoothly to significantly improve the electrical properties of a secondary battery such as a capacity retention rate.

Hereinabove, although the separator for a secondary battery, the method for manufacturing the same, and the lithium secondary battery including the same have been described in the present disclosure by specific matters and limited embodiments, they have been provided only for assisting in the entire understanding of the present disclosure, and the present disclosure is not limited to the above embodiments, and various modifications and changes may be made by those skilled in the art to which the present disclosure pertains from the description and the following claims.

Therefore, the present disclosure should not be limited to the above-described embodiments. Furthermore, the embodiments may be combined to form additional embodiments.

Provided are a separator coating composition for a secondary battery including inorganic particles and a silane salt compound having a specific structure, a separator using the same, and an electrochemical device including the same. Specifically, provided is a separator coating composition for a secondary battery which implements adhesion between an inorganic material layer and a porous substrate without the need for including an acid and/or a polymer-based organic binder in a coating composition for forming the inorganic material layer on one or both surfaces of the porous substrate, without the need for a separate acidic dispersing agent for dispersing the inorganic particles. A separator manufactured using the separator coating composition and an electrochemical device including the separator are also provided.

## Claims

1. A separator coating composition comprising: inorganic particles and a compound of the following Chemical Formula 1:

Chemical Formula 1

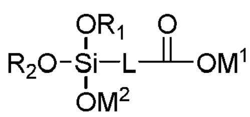

wherein

$M^1$ and $M^2$ are independently of each other an alkali metal;
L is C1-C3 alkylene; and
$R_1$ and $R_2$ are independently of each other hydrogen or an alkali metal.

2. The separator coating composition of claim 1,

wherein $M^1$ and $M^2$ are independently of each other lithium or sodium;

L is C2-C3 alkylene; and
$R_1$ and $R_2$ are independently of each other hydrogen, lithium, or sodium.

**3.** The separator coating composition of claim 1 or 2, wherein the compound of Chemical Formula 1 is a compound represented by the following Chemical Formula 2, 3, or 4:

Chemical Formula 2

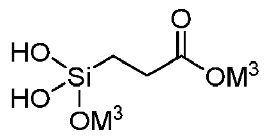

Chemical Formula 3

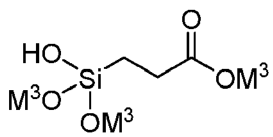

Chemical Formula 4

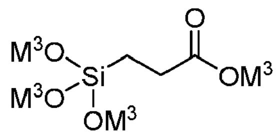

wherein $M^3$ is lithium or sodium.

**4.** The separator coating composition of any one of claims 1 to 3, wherein the inorganic particles are one or a mixture of two or more selected from metal oxides, metal nitrides, metal carbides, metal carbonates, metal hydrates, and metal carbonitrides, preferably wherein the inorganic particles are one or a mixture of two or more selected from the group consisting of boehmite, alumina ($Al_2O_3$), titanium oxide ($TiO_2$), cerium(IV) oxide ($CeO_2$), magnesium oxide (MgO), nickel(II) oxide (NiO), yttrium(III) oxide ($Y_2O_3$), calcium oxide (CaO), strontium titanate ($SrTiO_3$), tin dioxide ($SnO_2$), zinc oxide (ZnO), and zirconium dioxide ($ZrO_2$).

**5.** The separator coating composition of any one of claims 1 to 4, wherein an average particle size (D50) of the inorganic particles is 0.001 to 10 $\mu$m.

**6.** The separator coating composition of any one of claims 1 to 5, wherein 0.1 to 45 parts by weight of the compound of Chemical Formula 1 is included based on 100 parts by weight of the inorganic particles.

**7.** The separator coating composition of any one of claims 1 to 6, wherein

(i) it is free of acid,
(ii) optionally it is free of organic binder, or at most 5.00% by weight of an organic binder is included in the separator coating composition.

**8.** A separator for a secondary battery comprising:

(a) a porous substrate; and
(b) an inorganic material layer formed by applying the separator coating composition of any one of claims 1 to 7 on one or both surfaces of the porous substrate.

**9.** The separator for a secondary battery of claim 8, wherein the porous substrate is any one or a mixture of two or more selected from low-density polyethylene, linear low-density polyethylene, high-density polyethylene, ultra-high molecular weight polyethylene, polypropylene, and copolymers thereof or derivatives thereof.

**10.** The separator for a secondary battery of claim 8 or 9, wherein the thickness of the inorganic layer is 40% or less of the total thickness of the separator, and/or wherein the thickness of the separator is 1 to 100 μm.

**11.** The separator for a secondary battery of any one of claims 8 to 10, wherein the separator has an air permeability of 20 sec/100 cc or less and a change in heat shrinkage (%) of 1% or less.

**12.** An electrochemical device comprising the separator for a secondary battery of any one of claims 8 to 11.

**13.** The electrochemical device of claim 12, wherein the electrochemical device is a lithium secondary battery.

**14.** A method of producing the separator for a secondary battery of claim 8 to 11, comprising the steps of:

mixing the inorganic particles and the compound of Chemical Formula 1 to prepare the separator coating composition, and
coating one or both surfaces of a separator substrate formed of a porous polymer resin with the separator coating composition.

Europäisches Patentamt
European Patent Office
Office européen des brevets

# EUROPEAN SEARCH REPORT

Application Number
EP 23 19 6999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/296983 A1 (NODA KENICHI [JP]) 19 October 2017 (2017-10-19) * Par.38, 60, 61 * ----- | 1-3,5-7 | INV. H01M50/446 |
| T | Anonymous: "FC139273 ¦ 18191-40-7 ¦ Carboxyethylsilanetriol sodium salt - 25% in water", , 1 January 2024 (2024-01-01), pages 1-2, XP093119410, Retrieved from the Internet: URL:https://www.biosynth.com/p/FC139273/18191-40-7-carboxyethylsilanetriol-sodium-salt * page 1 * ----- | | |
| A | WO 2019/115500 A1 (SOLVAY [BE] ET AL.) 20 June 2019 (2019-06-20) * (Par. 121-123) * ----- | 1-14 | |
| A | US 2004/068035 A1 (PAIVA ADRIANA [US] ET AL) 8 April 2004 (2004-04-08) * (par. 85 * ----- | 1-14 | TECHNICAL FIELDS SEARCHED (IPC) H01M |

The present search report has been drawn up for all claims

1

| Place of search | Date of completion of the search | Examiner |
|---|---|---|
| Munich | 15 January 2024 | Bettio, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 19 6999

This annex lists the patent family members relating to the patent documents cited in the above-mentioned European search report. The members are as contained in the European Patent Office EDP file on
The European Patent Office is in no way liable for these particulars which are merely given for the purpose of information.

15-01-2024

| Patent document cited in search report | Publication date | Patent family member(s) | Publication date |
| --- | --- | --- | --- |
| US 2017296983 A1 | 19-10-2017 | JP 6670764 B2 | 25-03-2020 |
| | | JP 6847285 B2 | 24-03-2021 |
| | | JP 2020078803 A | 28-05-2020 |
| | | JP WO2016121888 A1 | 16-11-2017 |
| | | US 2017296983 A1 | 19-10-2017 |
| | | WO 2016121888 A1 | 04-08-2016 |
| WO 2019115500 A1 | 20-06-2019 | CN 111466042 A | 28-07-2020 |
| | | EP 3724939 A1 | 21-10-2020 |
| | | JP 2021507008 A | 22-02-2021 |
| | | JP 2023156293 A | 24-10-2023 |
| | | KR 20200096536 A | 12-08-2020 |
| | | US 2021087314 A1 | 25-03-2021 |
| | | WO 2019115500 A1 | 20-06-2019 |
| US 2004068035 A1 | 08-04-2004 | AU 2003268411 A1 | 04-05-2004 |
| | | US 2004068035 A1 | 08-04-2004 |
| | | WO 2004033575 A1 | 22-04-2004 |

EPO FORM P0459

For more details about this annex : see Official Journal of the European Patent Office, No. 12/82